(19) Europäisches Patentamt
European Patent Office
Office européen des brevets

(11) **EP 2 336 736 B1**

(12) **EUROPÄISCHE PATENTSCHRIFT**

(45) Veröffentlichungstag und Bekanntmachung des Hinweises auf die Patenterteilung:
**15.04.2015   Patentblatt 2015/16**

(51) Int Cl.:
*G01G 21/00* *(2006.01)*

(21) Anmeldenummer: **09180142.3**

(22) Anmeldetag: **21.12.2009**

(54) **Kraftübertragungsvorrichtung mit koppelbarem Kalibriergewicht**

Power transmission device with attachable calibration weight

Dispositif de transmission d'énergie avec un poids de calibrage pouvant être couplé

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**22.06.2011   Patentblatt 2011/25**

(73) Patentinhaber: **Mettler-Toledo AG**
**8606 Greifensee (CH)**

(72) Erfinder:
• **Burkhard, Hans-Rudolf**
  **8492 Wila (CH)**
• **Schneider, Ferdinand**
  **8406 Winterthur (CH)**
• **Genoud, Dominique**
  **4600 Olten (CH)**

(56) Entgegenhaltungen:
**CH-A5- 661 121     DE-A1- 10 024 017**

## Beschreibung

Die vorliegende Erfindung bezieht sich auf eine Kraftübertragungsvorrichtung für ein gravimetrisches Messinstrument, wobei die Kraftübertragungsvorrichtung einen Lastaufnahmebereich und einen feststehenden Bereich aufweist. Eine mit dem Lastaufnahmebereich verbundene Waagschale nimmt die zu wägende Last auf, deren auf die Waagschale wirkende Kraft direkt oder mittels eines kraftuntersetzenden Hebelwerks an einen Messaufnehmer übertragen wird. Eine Parallelogrammführung zur vertikalen Führung der Waagschale und des Lastaufnahmebereichs, die Kraftübertragungsvorrichtung und der Messaufnehmer bilden im Wesentlichen eine Wägezelle eines gravimetrischen Messinstruments.

Es sind im Stand der Technik verschiedene Funktionsprinzipien von Wägezellen bekannt, wie beispielsweise Wägezellen mit Dehnungsmessstreifen, Wägezellen mit Saiten oder EMFC- Wägezellen (Electro Magnetic Force Compensation). Gravimetrische Messinstrumente mit Saiten- oder EMFC- Wägezellen liefern Messresultate mit einer sehr hohen Auflösung.

Bei EMFC- Wägezellen wird das Gewicht der Last entweder direkt oder durch einen oder mehrere Kraftübertragungshebel in einen elektromechanischen Messaufnehmer übertragen, welcher ein dem Gewicht der Wägelast entsprechendes elektrisches Signal abgibt, das durch eine Wägeelektronik weiterverarbeitet und zur Anzeige gebracht wird.

Bei Saiten- Wägezellen entspricht der mechanische Aufbau weitgehend den EMFC-Wägezellen, mit dem Unterschied, dass an Stelle eines elektromagnetischen Messwertaufnehmers ein Schwingsaiten-Messwertaufnehmer eingesetzt wird. Durch die Last wird eine schwingende Saite gespannt, deren Frequenzänderung wiederum ein Mass für die aufgelegte Last darstellt. Während zum Zeitpunkt der Messwerterfassung das mechanische System der EMFC-Wägezellen in der Gleichgewichtslage ähnlich einer mechanischen Balkenwaage mit Gegengewichten ist, weist der Lastaufnahmebereich einer Saiten- Wägezelle eine geringe vertikale Verschiebung zum feststehenden Bereich auf, da die Saite unter Last gespannt wird und sich leicht dehnt. Daher werden Saiten- Wägezellen auch als "wegarme Kraftmesszellen" bezeichnet.

Beide Wägezellentypen werden beispielsweise in Präzisionswaagen und Analysewaagen im Milligramm-Bereich oder in Mikrowaagen im Mikrogramm-Bereich eingesetzt und bedürfen einer periodischen Kalibrierung, damit sie den Herstellerangaben und den gesetzlichen Vorschriften entsprechend Messwerte innerhalb eines vorgeschriebenen Toleranzbereichs liefern. Mit diesen periodischen Kalibrierungen werden auf die Wägezelle einwirkende Einflüsse korrigiert, beispielsweise eine sich verändernde Umgebungstemperatur oder der sich verändernde Luftdruck.

Die Kalibrierung erfolgt durch periodisches Belasten des Lastaufnahmebereichs mit einem bekannten Gewicht. Aus der Differenz des vor Auslieferung der Wägezelle bei der Endkontrolle ermittelten Werts und dem aktuell gemessenen Wert kann ein Korrekturwert errechnet werden, mittels dem die nachfolgenden Messresultate der Wägezelle korrigiert werden können. Um einen möglichst genauen Kalibrierwert zu erhalten, sollte das Kalibriergewicht der maximal zulässigen Last der Wägezelle entsprechen. Dies kann bedeuten, dass sehr grosse Kalibriergewichte erforderlich sind.

Im Stand der Technik sind verschiedene gravimetrische Messinstrumente bekannt, die ein integriertes Kalibriergewicht aufweisen.

Ein solches nach dem Prinzip der elektromagnetischen Kraftkompensation arbeitendes gravimetrisches Messinstrument mit eingebautem, stabförmigem Kalibriergewicht wird in der EP 0 955 530 B1 offenbart. Das stabförmige Kalibriergewicht wird auf einen mit dem Lastaufnahmebereich gekoppelten Kalibriergewichtsarm aufgelegt, welcher als Übersetzungshebel dient. Dank dieser Übersetzung können die Masse des Kalibriergewichts und damit seine Dimensionen klein gehalten werden. Da der Kalibriergewichtsarm stets mit dem Lastaufnahmebereich gekoppelt ist, dient er lediglich als Übersetzung und Aufnahme für das Kalibriergewicht während des Kalibriervorganges und ist nicht Teil des Kalibriergewichts selbst. Der Kalibriergewichtsarm ist folglich Teil einer Kraftübertragungsvorrichtung beziehungsweise eines Hebelwerks zur Übertragung und Untersetzung der Last auf den Messaufnehmer und bleibt auch während des Wägebetriebes mit dem Lastaufnahmebereich dauernd verbunden.

Wie in der CH 661 121 A5 offenbart, kann die Kraftübertragungsvorrichtung auch ein mehrstufiges Hebelwerk aufweisen, wobei die einzelnen Hebel mittels Koppelelementen in geeigneter Weise miteinander verbunden sind, so dass zwischen dem Lastaufnahmebereich und dem Messaufnehmer eine Kraftuntersetzung erreicht wird. An einem der Koppelelemente sind geeignete Aufnahmen zum Auflegen eines Kalibriergewichts ausgebildet.

Die JP3761792 B2 offenbart eine mit Dehnmessstreifen bestückte Wägezelle, die ein Kalibriergewicht mit einem Übersetzungshebel aufweist. Zwischen dem Übersetzungshebel und dem Lastaufnahmebereich ist ein Koppelelement angeordnet. Durch Anheben des Kalibriergewichts und des Koppelelements wird eine am Koppelelement ausgebildete Lagerpfanne von einem am Lastaufnahmebereich angeordneten Schneidlager abgehoben und dadurch der Übersetzungshebel vom Lastaufnahmebereich entkoppelt.

DE 100 24 017 offenbart eine weitere bekannte Kraftübertragungsvorrichtung eines gravimetrischen Messinstruments mit einem internen Kalibriergewicht und einem Kalibriergewichtshebel.

Alle vorangehend dargestellten Lösungen des Standes der Technik verfügen über eine Kalibriergewichtsauflegevorrichtung wie sie dem Fachmann bekannt sind.

Die präzise Ermittlung des Korrekturwertes hängt nicht nur vom Auflösungsvermögen des Messaufnehmers ab, sondern auch wesentlich von der präzisen Einhaltung der geometrischen Verhältnisse. Bereits kleinste Abweichungen des aufgelegten Kalibriergewichts von dessen Sollposition auf dem in der EP 0 955 530 B1 beschriebenen Kalibriergewichtsarm, dem in der CH 661 121 A5 beschriebenen Koppelglied oder geringste Verschiebungen der Lage der Pfanne zum Schneidlager in der JP3761792 B2, führen zu einer Verlängerung oder Verkürzung des wirksamen Hebelarms und damit zu einem fehlerbehafteten Korrekturwert. Infolge dessen werden die Berührungsstellen zwischen Kalibriergewicht und Kalibriergewichtsarm oder Schneidlager und Pfanne mit grösster Präzision und mit hoher Kostenfolge gefertigt.

Die Aufgabe der vorliegenden Erfindung besteht in der Schaffung einer Kraftübertragungsvorrichtung für ein gravimetrisches Messinstrument mit einem Messaufnehmer, mit welcher ein Kalibriergewicht derart in Anlage bringbar ist, dass der Einfluss sich ändernder geometrischer Verhältnisse auf die am Messaufnehmer wirkende Kalibriergewichtskraft minimiert wird.

Diese Aufgabe wird durch die erfindungsgemässe Kraftübertragungsvorrichtung mit einem Kalibriergewichtshebel sowie durch ein gravimetrisches Messinstrument mit der erfindungsgemässen Kraftübertragungsvorrichtung gelöst.

Eine Kraftübertragungsvorrichtung eines gravimetrischen Messinstruments weist einen feststehenden Bereich und einen Lastaufnahmebereich auf. Der Lastaufnahmebereich ist direkt oder durch mindestens ein Koppelelement und mindestens einen Hebel kraftübertragend mit einem am feststehenden Bereich angeordneten Messaufnehmer verbunden. Ferner weist die erfindungsgemässe Kraftübertragungsvorrichtung einen Kalibrierungshebel auf, dessen Gelenkstelle am feststehenden Bereich abgestützt ist. Der Kalibrierungshebel beinhaltet einen ersten und einen zweiten Kalibrierungshebelarm, wobei der erste Kalibrierungshebelarm mit einem Kalibriergewicht fest verbunden ist und der zweite Kalibrierungshebelarm durch ein unidirektionales Koppelelement mit dem Lastaufnahmebereich oder mit dem mindestens einen Koppelelement oder mit einem Hebelarm des mindestens einen Hebels verbunden ist. Das unidirektionale Koppelelement ist in ein erstes Teilkoppelelement und in ein zweites Teilkoppelelement zweigeteilt. Das erste Teilkoppelelement ist mittels eines ersten Dünnstellenbiegelagers am Lastaufnahmebereich oder am Koppelelement oder am Hebelarm festgelegt und das zweite Teilkoppelelement ist mittels eines zweiten Dünnstellenbiegelagers am zweiten Kalibrierungshebelarm festgelegt. Die Dünnstellenbiegelager beider Teilkoppelelemente sind derart ausgestaltet, dass sie möglichst flexibel und dadurch bei deren Auslenkung geringe Biegemomente verursachend ausgestaltet sind, aber dennoch gattungsgemäss Zug oder Druckkräfte in Richtung ihrer Mittellängsachse übertragen können. Ferner darf die Labilität auf Biegung der Dünstellenbiegelager nicht dazu führen, dass die Teilkoppelelemente infolge der Schwerkraft oder durch Trägheits- und Beschleunigungskräfte während des Betriebes der Kraftübertragungsvorrichtung auslenken.

Die Teilkoppelelemente sind derart zueinander ausgerichtet, dass infolge der Zweiteilung des unidirektionalen Koppelelements vom zweiten Dünnstellenbiegelager zum ersten Dünnstellenbiegelager nur eine Zugkraft oder nur eine Druckkraft übertragbar ist. Diese Ausgestaltung ermöglicht es, den Kalibrierungshebel und das mit diesem fest verbundene Kalibriergewicht mit dem Lastaufnahmebereich, einem Koppelelement oder einem Hebelarm der Kraftübertragungsvorrichtung kraftübertragend zu koppeln oder vollständig zu entkoppeln. Der Kopplungs- oder Entkopplungsvorgang kann mittels der weiter oben erwähnten Kalibriergewichtsauflegevorrichtung durch Anheben oder Absenken des Kalibriergewichts erfolgen. Das Merkmal "unidirektionales Koppelelement" im Sinne der vorliegenden Erfindung ist somit dahingehend zu verstehen, dass durch die spezielle Ausgestaltung desselben in einer bestimmten Richtung entlang seiner Mittellängsachse nur eine Druckkraft oder nur eine Zugkraft übertragen werden kann. Bei Belastungen in der Gegenrichtung lösen sich die beiden Teilkoppelelemente voneinander, wodurch keine Kraftübertragung zwischen diesen möglich ist. Je nach konkreter Ausgestaltung der beiden Teilkoppelelemente kann dieses Lösen auch nur für eine bestimmte Verschiebestrecke des ersten Teilkoppelelements relativ zum zweiten Teilkoppelelement gelten, wobei im Sinne der Erfindung nur diese bestimmte Verschiebestrecke zu betrachten ist.

Im Unterschied zum Stand der Technik erfolgt die Kraftübertragung nicht über die Auflagestellen des Kalibriergewichts, sondern über das unidirektionale Koppelelement beziehungsweise über dessen Dünnstellenbiegelager. Demzufolge bleiben die geometrischen Verhältnisse stets gleich, da kleinste Verschiebungen zwischen dem ersten und dem zweiten Teilkoppelelement ausgeglichen werden und nicht in den eigentlichen Krafteinleitungspunkten erfolgen, welche durch die unveränderbare Lage der Dünnstellenbiegelager definiert sind. Da bei Wägezellen mit elektromagnetischer Kraftkompensation die Erfassung der Messwerte im ausbalancierten Zustand erfolgt, sind die Biegemomente in den Lagerstellen der Kraftübertragungsvorrichtung annähernd Null. Der Kalibrierungshebel beziehungsweise dessen Gelenkstelle ist vorzugsweise entsprechend ausgestaltet, so dass während des Kalibrierungsvorganges das Schwenklager biegemomentfrei ist. Näherungsweise gelten die vorangehenden Ausführungen auch für Saiten- Wägezellen, da bei Belastung des Lastaufnahmebereichs nur eine geringe Streckung der Saite und daher nur geringe Biegemomente in den Lagerstellen der Kraftübertragungsvorrichtung vorhanden sind.

Vorzugsweise fallen die Mittellängsachsen des ersten und des zweiten Dünnstellenbiegelagers zusammen, so dass innerhalb des unidirektionalen Koppelelements keine Kippmomente entstehen. Geringfügiger paralleler Versatz der beiden Mittellängsachsen kann aber zugelassen werden, wenn die Ausgestaltung der mindestens einen Berührungsstelle zwischen dem ersten Teilkoppelelement und dem zweiten Teilkoppelelement eine innere Stabilität gegen Auslenken der beiden Teilkoppelelemente zueinander aufweist. Die Stabilität ist bei der Übertragung von Zugkräften naturgemäss gegeben, während zur Übertragung von Druckkräften nur bestimmte Ausgestaltungen dem unidirektionalen Koppelelement eine innere Stabilität verleihen.

In einer ersten Ausführung weist das zweite Teilkoppelelement zur Übertragung von Druckkräften eine gegen das erste Teilkoppelelement gerichtete Fläche mit zwei aus der Fläche ragenden Vorsprünge auf, welche in Bezug zur Mittellängsachse des zweiten Dünnstellenbiegelagers spiegelsymmetrisch angeordnet sind. Ferner weist das erste Teilkoppelelement mindestens eine gegen das zweite Koppelelement gerichtete Auflagefläche auf, auf welcher sich beide Vorsprünge abstützen können. Durch diese Ausgestaltung sind in einer Ebene orthogonal zu den Mittellängsachsen der beiden Dünnstellenbiegelager zwei Berührungsstellen vorhanden, welche dem unidirektionalen Koppelelement zur Übertragung einer Druckkraft eine innere Stabilität verleihen.

Damit das erste Teilkoppelelement und das zweite Teilkoppelelement beim Kalibriervorgang zueinander zentriert werden und Verschiebungen orthogonal zu den Mittellängsachsen der Dünnstellenbiegelager verhindert werden, können zwei Auflageflächen für die beiden Vorsprünge in stumpfem Winkel zueinander geneigt ausgebildet sein. Jedoch sind der Neigung der Auflageflächen aufgrund der notwendigen Forderung nach innerer Stabilität des unidirektionalen Koppelelements bestimmte Grenzen gesetzt.

Diese Grenzen richten sich nach den geometrischen Verhältnissen des unidirektionalen Koppelelements, wobei der jeweils zwischen einer Auflagefläche und der Mittellängsachse des Dünnstellenbiegelagers eingeschlossene Winkel $\alpha$ die folgenden Bedingungen erfüllen muss:

$$90° \geq \alpha \geq \mathrm{arcos}\ (b/s)$$

Dabei entspricht b dem rechtwinkligen Abstand einer Berührungsstelle zur Mittellängsachse des Dünnstellenbiegelagers und s dem Abstand einer Berührungsstelle zur Biegeachse des Dünnstellenbiegelagers. Gemäss der vorangehend erläuterten Definition des Winkels $\alpha$ ist die innere Stabilität dann erreicht, wenn sich die Wirkungslinien der durch die Berührungsstellen übertragenen Kräfte nicht innerhalb des Teilkoppelelements schneiden.

Zur Übertragung von Zugkräften kann das erste Teilkoppelelement ein erstes Zugelement mit einem Vorsprung aufweisen und das zweite Teilkoppelelement ein zweites Zugelement mit einer Pfanne aufweisen, wobei das erste Zugelement und das zweite Zugelement ineinander greifen, der Vorsprung zur Pfanne ausgerichtet ist und bei Übertragung von Zugkräften der Vorsprung mit der Pfanne in Anlage ist.

Ferner besteht die Möglichkeit, dass das erste Teilkoppelelement und das zweite Teilkoppelelement mittels eines flexiblen Scharniers miteinander verbunden sind. Obwohl in diesem Ausführungsbeispiel die beiden Teilkoppelelemente physisch miteinander verbunden sind, ist das Koppelelement trotzdem erfindungsgemäss zweigeteilt. Die Öffnungsrichtung des flexiblen Scharniers ist der Mittellängsachse des ersten und zweiten Dünnstellenbiegelagers entsprechend angeordnet. Zur Übertragung von Zug- oder Druckkräften ist am ersten Teilkoppelelement ein Vorsprung und am zweiten Teilkoppelelement eine zum Vorsprung ausgerichtete Berührungsfläche ausgebildet.

Die Kraftübertragungsvorrichtung kann auch eine Parallelführung beinhalten, so dass in deren Betriebsstellung der Lastaufnahmebereich mittels mindestens eines oberen Parallellenkers und mittels mindestens eines unteren Parallellenkers am feststehenden Bereich in vertikaler Richtung geführt ist.

Die Kraftübertragungsvorrichtung kann aus verschiedenen Einzelteilen bestehen, welche mittels Verbindungselementen zu einer Einheit zusammengefügt sind. Mehrere dieser Teile können aber auch stoffschlüssig miteinander verbunden sein. Vorzugsweise sind mindestens der Lastaufnahmebereich, der feststehende Bereich, der Kalibrierungshebel und das unidirektionale Koppelelement monolithisch miteinander verbunden.

Wie bereits weiter oben erwähnt, kann die erfindungsgemässe Kraftübertragungsvorrichtung zusammen mit einem Messaufnehmer und mit einem Kalibriergewicht als Wägezelle in einem gravimetrischen Messinstrument eingesetzt werden. Ein gravimetrisches Messinstrument wird üblicherweise derart kalibriert, dass die Gewichtskraft des Kalibriergewichts durch die Kraftübertragungsvorrichtung in derselben Richtung wie eine auf den Lastaufnahmebereich wirkende Kraft auf den Messaufnehmer übertragbar ist. Folglich wird der Messaufnehmer in gleicher Weise mit einer Kalibrierkraft belastet wie im normalen Betrieb mit einer zu wiegenden Last. Bei Saiten- Wägezellen kann der Messaufnehmer meistens nur in der Lastrichtung belastet werden, weshalb die vorangehend beschriebene Ausführung für Saiten- und für EMFC- Wägezellen geeignet ist.

Es ist aber auch möglich, dass die Gewichtskraft des Kalibriergewichts durch die Kraftübertragungsvorrichtung in der entgegengesetzten Richtung wie eine auf den Lastaufnahmebereich wirkende Kraft auf den Messaufnehmer übertragbar ist. Diese Ausführung ist insbesondere für EMFC- Wägezellen geeignet, die über einen Messaufnehmer mit Push- Pull System verfügen, wie dies in der

US 20080218303 A1 ausführlich beschrieben ist. Aufgrund dieser Ausgestaltung kann das Kalibriergewicht

EP 2 336 736 B1

als Kompensationsgewicht eingesetzt werden, um den Lastbereich der Wägezelle zu vergrössern. Eine derart ausgebildete Wägezelle könnte bei entkoppeltem Kalibriergewicht beispielsweise Lasten im Bereich von 0-100 Gramm wiegen und mit eingekoppeltem Kalibriergewicht den Wägebereich erweitern und Lasten im Bereich von 100-200 Gramm wiegen, da die Gewichtskraft des Kalibriergewichts der auf den Lastaufnahmebereich wirkenden Last entgegenwirkt.

Üblicherweise ist das Kalibriergewicht aus einem korrosionsbeständigen Material mit einheitlicher Dichte ρ = 8.0kg / dm³ gefertigt. Das Kalibriergewicht kann aber auch

teilweise aus demselben Material wie die Kraftübertragungsvorrichtung gefertigt sein und mit einer Ergänzungsmasse höherer Dichte versehen sein. Um die Genauigkeit des Kalibrierwerts zu erhöhen, kann ferner ein Drucksensor zur Erfassung des Umgebungsdrucks des gravimetrischen Messinstruments vorhanden sein. Dessen Messwert kann zur Korrektur des Auftriebs des Kalibriergewichts herangezogen werden, da die Auftriebskraft der vom Kalibriergewicht verdrängten Luft der Gewichtskraft des Kalibriergewichts entgegenwirkt.

Verschiedene Ausführungsvarianten der erfindungsgemässen

Kraftübertragungsvorrichtung und deren Verwendung in einem gravimetrischen Messinstrument werden anhand der folgenden Figuren näher beschrieben, wobei gleiche Elemente mit denselben Bezugszeichen versehen sind. Es zeigen:

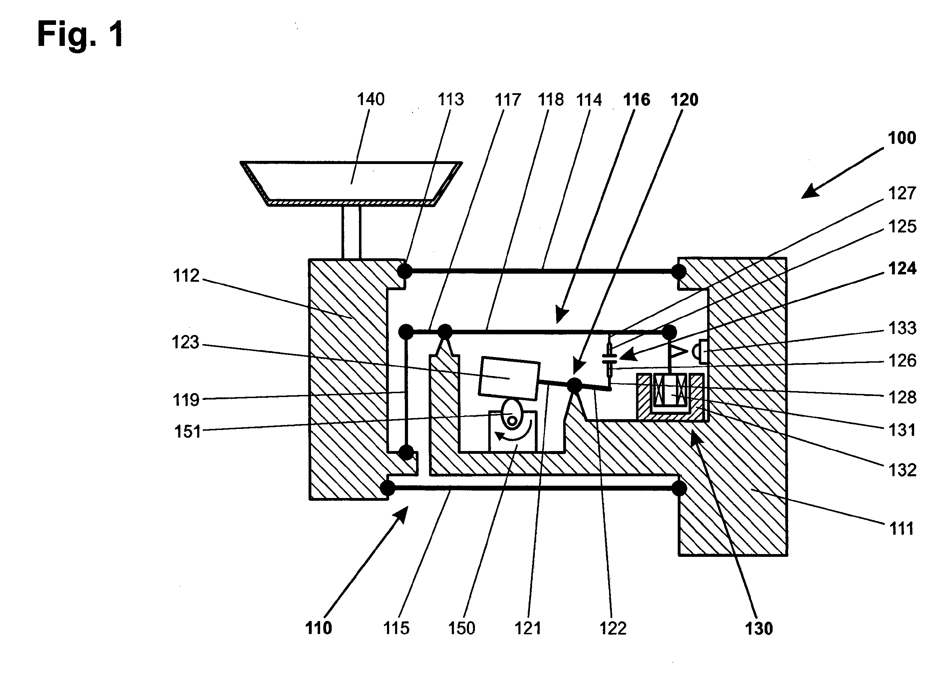

Figur 1 eine schematische Darstellung einer Wägezelle mit einer ersten Ausführung der Kraftübertragungsvorrichtung in der Aufsicht, welche ein zwischen dem Lastaufnahmebereich und dem Messaufnehmer angeordnetes Hebelwerk zur Untersetzung der auf den Lastaufnahmebereich wirkenden Kraft aufweist und mit einem unidirektionalen Koppelelement zwischen dem Hebelwerk und dem Kalibrierungshebel, welches nur Druckkräfte übertragen kann;

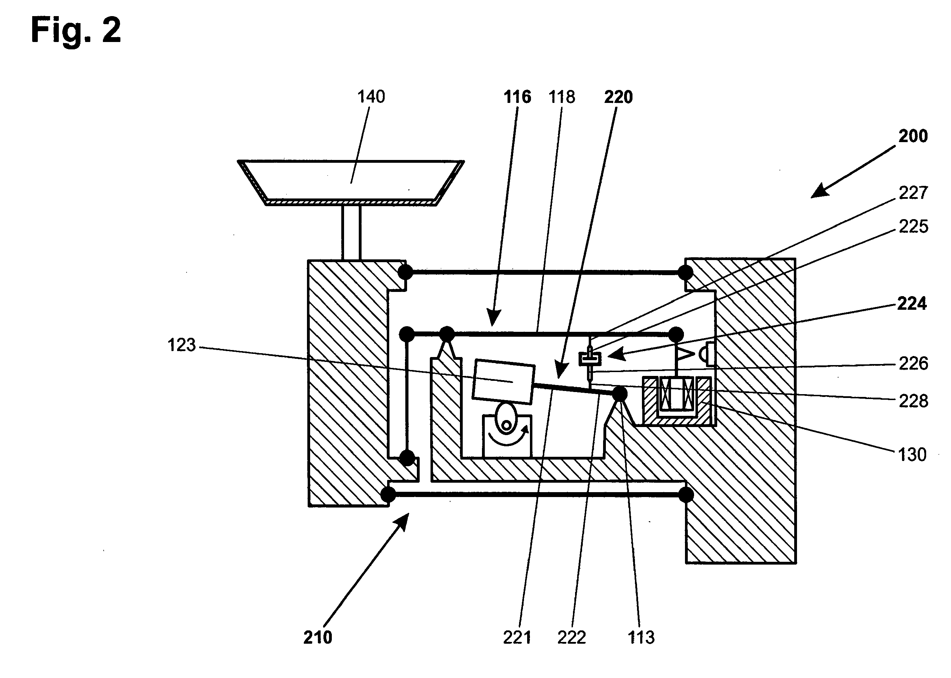

Figur 2 eine schematische Darstellung einer Wägezelle mit einer zweiten Ausführung der Kraftübertragungsvorrichtung in der Aufsicht, welche ein zwischen dem Lastaufnahmebereich und dem Messaufnehmer angeordnetes Hebelwerk zur Untersetzung der auf den Lastaufnahmebereich wirkenden Kraft aufweist und mit einem unidirektionalen Koppelelement zwischen dem Hebelwerk und dem Kalibrierungshebel, welches nur Zugkräfte übertragen kann;

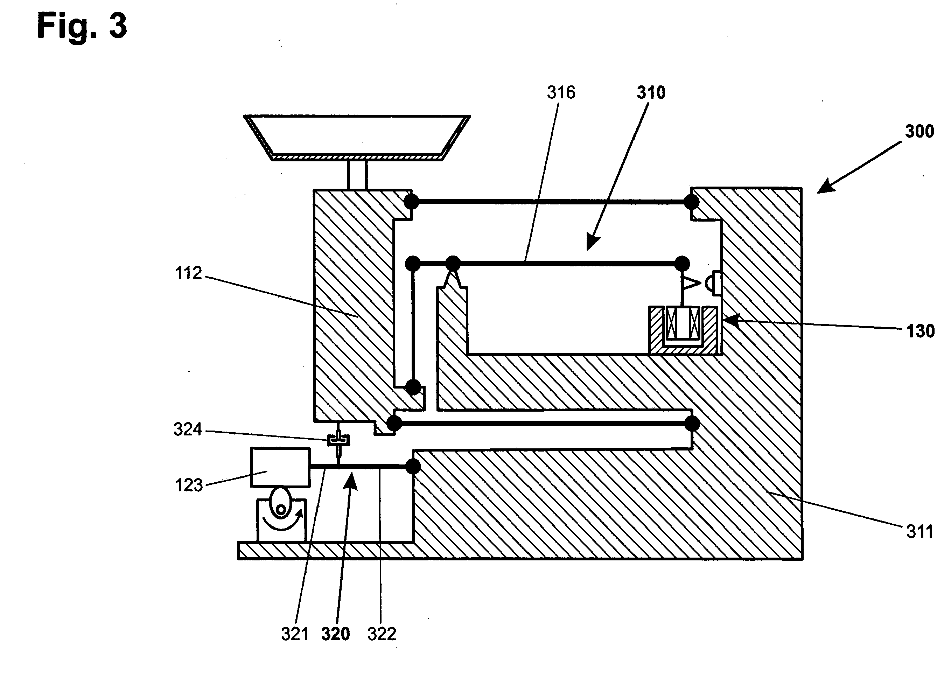

Figur 3 eine schematische Darstellung einer Wägezelle mit einer dritten Ausführung der Kraftübertragungsvorrichtung in der Aufsicht, welche ein zwischen dem Lastaufnahmebereich und dem Messaufnehmer angeordnetes Hebelwerk zur Untersetzung der auf den Lastaufnahmebereich wirkenden Kraft aufweist und mit einem unidirektionalen Koppelelement zwischen dem Lastaufnahmebereich und dem Kalibrierungshebel, welches nur Zugkräfte übertragen kann;

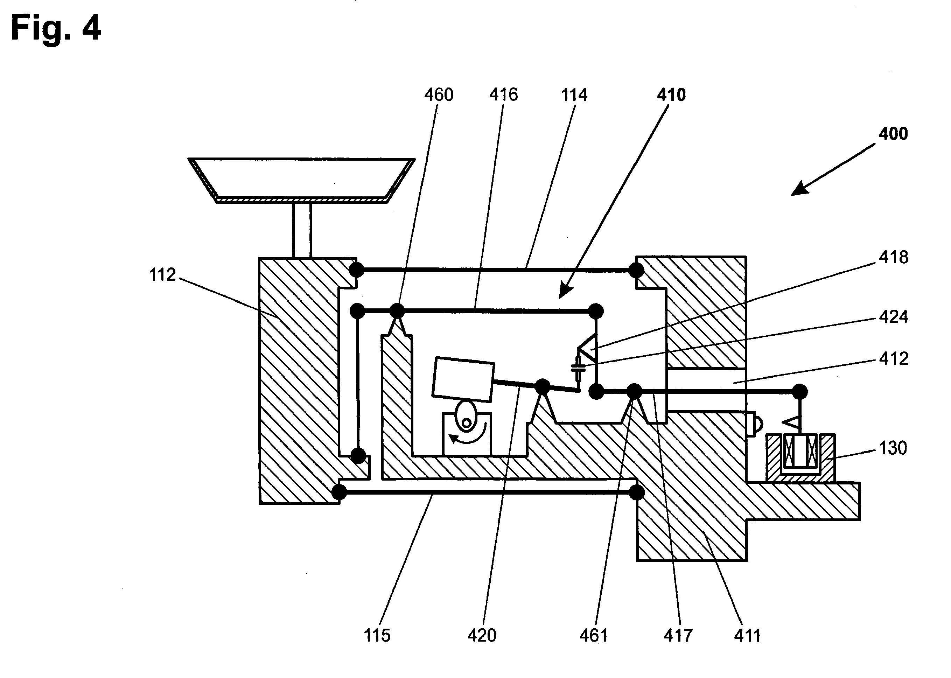

Figur 4 eine schematische Darstellung einer Wägezelle mit einer vierten Ausführung der Kraftübertragungsvorrichtung in der Aufsicht, welche ein zwischen dem Lastaufnahmebereich und dem Messaufnehmer angeordnetes Hebelwerk mit zwei Hebeln zur Untersetzung der auf den Lastaufnahmebereich wirkenden Kraft aufweist und mit einem unidirektionalen Koppelelement zwischen einem zweiten Koppelelement der beiden Hebel und dem Kalibrierungshebel, welches nur Druckkräfte übertragen kann;

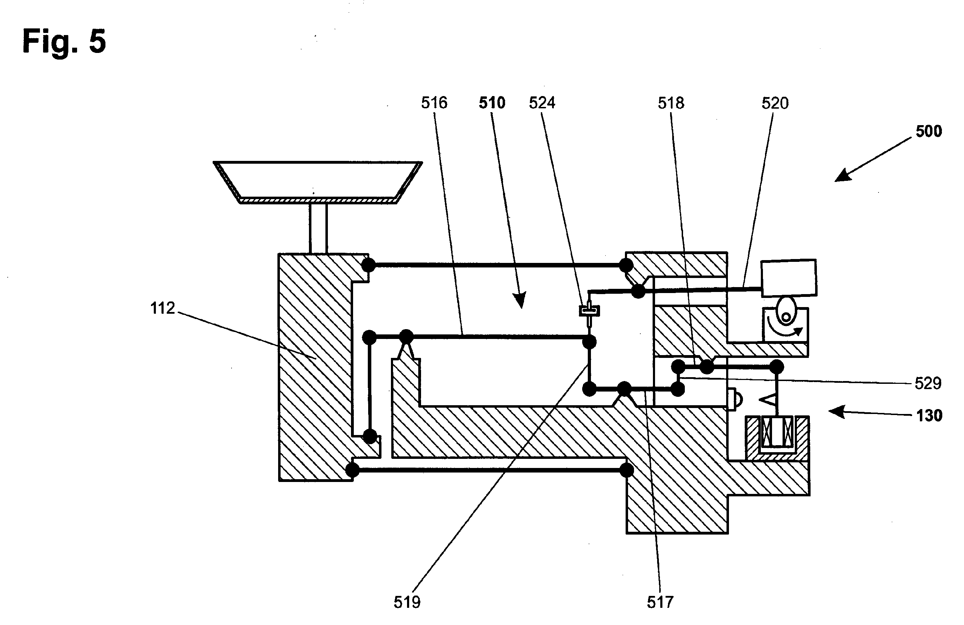

Figur 5 eine schematische Darstellung einer Wägezelle mit einer fünften Ausführung der Kraftübertragungsvorrichtung in der Aufsicht, welche ein zwischen dem Lastaufnahmebereich und dem Messaufnehmer angeordnetes Hebelwerk mit drei Hebeln zur Untersetzung der auf den Lastaufnahmebereich wirkenden Kraft aufweist und mit einem unidirektionalen Koppelelement zwischen dem Hebelwerk und dem Kalibrierungshebel, welches nur Zugkräfte übertragen kann;

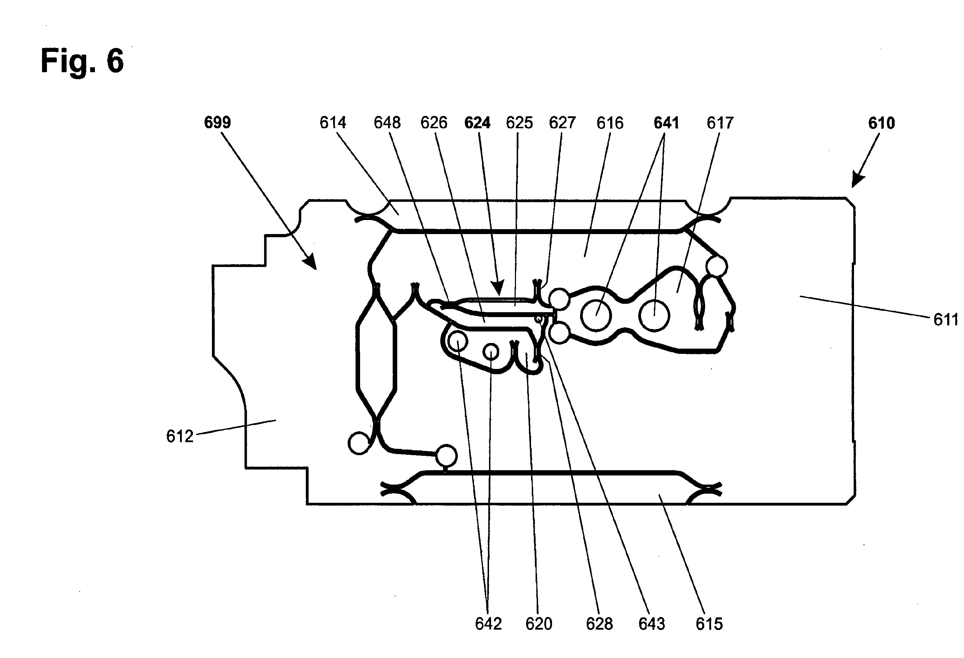

Figur 6 die Darstellung einer monolithisch ausgebildeten Kraftübertragungsvorrichtung in der Aufsicht, bei welcher mittels dünner Schnittlinien ein Hebelwerk, ein Spulenhebel, ein Kalibrierungshebel und die Hebel verbindenden Koppelelemente sowie eine Parallelführung herausgearbeitet sind, wobei das zwischen dem Hebelwerk und dem Kalibrierungshebel angeordnete unidirektionale Koppelelement zwei Teilkoppelelemente aufweist, die mittels eines flexiblen Scharniers miteinander verbunden sind;

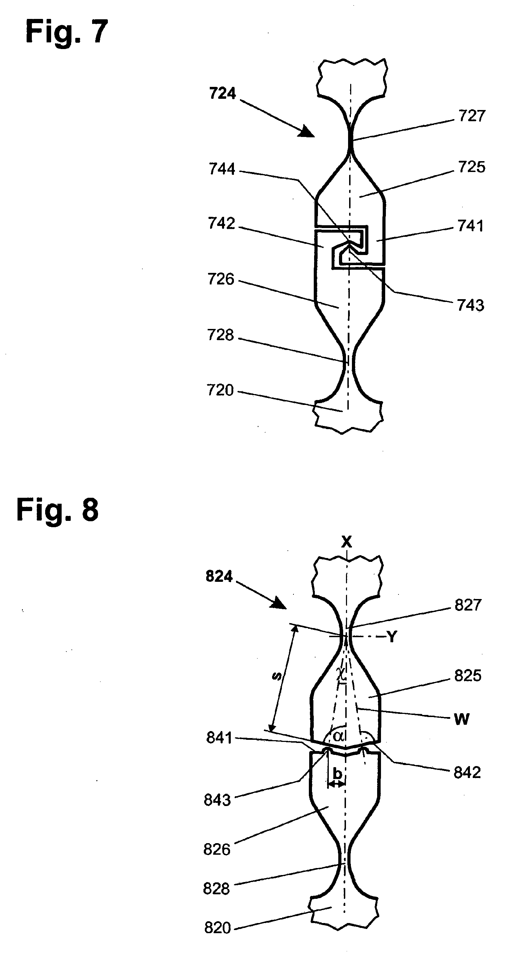

Figur 7 eine mögliche Ausgestaltung eines unidirektionalen Koppelelements, mit welchem nur eine Zugkraft übertragbar ist;

Figur 8 eine mögliche Ausgestaltung eines unidirektionalen Koppelelements, mit welchem nur eine Druckkraft übertragbar ist.

5

Die Figur 1 zeigt in der Aufsicht eine schematische Darstellung eine Wägezelle 100 mit einer ersten Ausführung der Kraftübertragungsvorrichtung 110. Die Kraftübertragungsvorrichtung 110 weist einen feststehenden Bereich 111 und einen Lastaufnahmebereich 112 auf. Der Lastaufnahmebereich 112 ist mittels eines ersten Parallellenkers 114 und mittels eines zweiten Parallellenkers 115 am feststehenden Bereich 111 parallel geführt. Alle Gelenkstellen 113 der Kraftübertragungsvorrichtung 110 sind als dicke Punkte dargestellt und können jede, im Stand der Technik bekannte Ausgestaltung aufweisen. Üblicherweise werden diese Gelenkstellen 113 als Dünnstellenbiegelager ausgestaltet, wie sie in den Figuren 5 bis 7 dargestellt sind.

Mit dem Lastaufnahmebereich 112 ist ein als Waagschale ausgebildeter Lastaufnehmer 140 verbunden. Ferner ist am feststehenden Bereich 111 ein Messaufnehmer 130 festgelegt, durch welchen ein kraftabhängiges Wägesignal erzeugt werden kann. Der dargestellte Messaufnehmer 130 weist eine Spule 131 und einen Magneten 132 sowie einen Positionsgeber 133 auf. Der Magnet 132 ist mit dem feststehenden Bereich 111 fest verbunden und die zu messende Kraft greift an der Spule 131 an, welche berührungsfrei innerhalb des Magneten 132 angeordnet ist. Durch die an der Spule 131 angreifende Kraft wird diese relativ zum Magneten 132 verschoben und diese Verschiebung durch den Positionsgeber 133 detektiert. Das vom Positionsgeber 133 abgegebene Signal wird an eine nicht dargestellte Waagenelektronik weitergeleitet, welche einen die Spule 131 durchfliessenden Strom kontinuierlich regelt, um die ursprüngliche Position der Spule 131 zum Magneten 132 trotz der einwirkenden Kraft wiederherzustellen. Der die Spule 131 durchfliessende Strom wird gemessen, diese Rohmesssignale in der Waagenelektronik zu einem Messwert verarbeitet und dieser Messwert an eine ebenfalls nicht dargestellte Anzeige weitergeleitet und dort zur Anzeige gebracht. Selbstverständlich können an Stelle des dargestellten Messaufnehmers 130 auch andere Messaufnehmer, beispielsweise Schwingsaiten, induktive und kapazitive Messaufnehmer, mit Dehnungsmessstreifen versehene Messaufnehmer und dergleichen mehr eingesetzt werden.

Da der dargestellte Messaufnehmer 130 nur eine begrenzte Kompensationskraft zur Kompensation der auf den Lastaufnahmebereich 140 wirkenden Kraft aufbringen kann, wird häufig ein einstufiges oder mehrstufiges Hebelwerk zur Untersetzung der zu messenden Kraft eingesetzt. Dieses ist zwischen dem Lastaufnahmebereich 112 und dem Messaufnehmer 130 kraftübertragend angeordnet. Das dargestellte Hebelwerk weist einen am feststehenden Bereich 111 schwenkbar gelagerten Hebel 116 auf, dessen kurzer Hebelarm 117 durch ein erstes Koppelelement 119 mit dem Lastaufnahmebereich 112 verbunden ist. Der lange Hebelarm 118 des Hebels 116 ist mit der Spule 131 verbunden.

Die Kraftübertragungsvorrichtung 110 weist zudem einen Kalibrierungshebel 120 auf, welcher ebenfalls am feststehenden Bereich 111 schwenkbar gelagert ist und dessen erster Kalibrierungshebelarm 121 mit einem Kalibriergewicht 123 fest verbunden ist. Zur Übertragung der Gewichtskraft des Kalibriergewichts 123 dient ein unidirektionales Koppelelement 124, dessen erstes Teilkoppelelement 125 mittels eines ersten Dünnstellenbiegelagers 127 mit dem langen Hebelarm 118 verbunden ist und dessen zweites Teilkoppelelement 126 mittels eines zweiten Dünnstellenbiegelagers 128 mit dem zweiten Kalibrierungshebelarm 122 verbunden ist. Das erste und das zweite Dünnstellenbiegelager 127, 128 stehen hier für alle möglichen Lagerstellenarten, die eine gewisse Eigensteifigkeit aufweisen oder deren Schwenkwinkel begrenzt ist. Diese Eigenschaft der Lagerstellen beziehungsweise Dünnstellenbiegelager 127, 128 ist zumindest für die stehende Lagerstelle beziehungsweise das zweite Dünnstellenbiegelager 128 absolut notwendig, damit die beiden Teilkoppelelemente 125, 126 im voneinander getrennten Zustand zueinander ausgerichtet verbleiben und nicht infolge der Schwerkraft abkippen.

Wie in Figur 1 dargestellt, ist am feststehenden Bereich eine

Kalibriergewichtsauflegevorrichtung 150 festgelegt die, je nach Stellung ihrer Kurvenscheibe 151 das Kalibriergewicht 123 am feststehenden Bereich 111 abstützt oder freigibt. Im abgestützten Zustand sind die beiden Teilkoppelelemente 125, 126 voneinander getrennt und im freigegebenen Zustand sind die beiden Teilkoppelelemente 125, 126 miteinander in Anlage, wodurch die Gewichtskraft des Kalibriergewichts 123 auf den Hebel 118 und damit auf die Spule 131 des Messaufnehmers 130 übertragen wird. Aus der schematischen Darstellung ist klar ersichtlich, dass mit dem gezeigten unidirektionalen Koppelelement 124 nur Druckkräfte übertragen werden können, da bei freigegebenem Kalibriergewicht 123 das zweite Teilkoppelelement 126 gegen das erste Teilkoppelelement 125 gedrückt wird und gegen die vom Messaufnehmer 130 erzeugte Reaktionskraft wirkt.

Figur 2 zeigt eine schematische Darstellung einer Wägezelle 200 mit einer zweiten Ausführung der Kraftübertragungsvorrichtung 210 in der Aufsicht. Mit Ausnahme des Kalibrierungshebels 220 und des unidirektionalen Koppelelements 224, entsprechen alle dargestellten Elemente den Elementen von Figur 1 und werden nachfolgend nicht mehr beschrieben.

Auch der in Figur 2 dargestellte Kalibrierungshebel 220 weist einen ersten Kalibrierungshebelarm 221 und einen zweiten Kalibrierungshebelarm 222 auf, wobei sich der erste Kalibrierungshebelarm 221 vom Kalibriergewicht 123 bis zur Gelenkstelle 113 erstreckt und der zweite Kalibrierungshebelarm 222 sich zwischen der Gelenkstelle 113 und dem zweiten Dünnstellenbiegelager 228 des unidirektionalen Koppelelements 224 erstreckt.

Das unidirektionale Koppelelement 224 weist ein erstes Teilkoppelelement 225 und ein zweites Teilkoppelelement 226 auf, die im unbelasteten Zustand berührungsfrei ineinander greifen. Sobald durch die Freigabe des Kalibriergewichts 123 eine Zugkraft vom zweiten Dünnstellenbiegelager 228 zum ersten Dünnstellenbiegelager 227 und damit auf den langen Hebelarm 118 des Hebels 116 übertragen werden soll, verhakt sich nach kurzer relativer Verschiebung der beiden entlang einer durch die Dünnstellenbiegelager 227, 228 definierten Verschiebestrecke das zweite Teilkoppelelement 226 im ersten Teilkoppelelement 225.

Es ist noch zu erwähnen, dass die auf den langen Hebelarm 118 übertragene Zugkraft des Kalibriergewichts 123 der zu messenden Kraft einer auf den Lastaufnehmer 140 aufgelegten Last entgegenwirkt. Damit kann das Kalibriergewicht 123 auch dazu verwendet werden, den Wägebereich der Wägezelle 200 zu erweitern. Mit einem Kalibriergewicht 123 lässt sich der Wägebereich maximal verdoppeln, wenn die durch das Kalibriergewicht 123 auf den Messaufnehmer 130 wirkende Kraft der maximalen Kraft entspricht. Der Wägebereich ist dann unsichtbar für den Benutzer in zwei Teilbereiche unterteilt, wobei im ersten Teilbereich keine Kraft des Kalibriergewichts 123 auf den Messaufnehmer 130 einwirkt und im zweiten Teilbereich das Kalibriergewicht 123 mit dem Hebelwerk gekoppelt ist. Gegebenenfalls wird infolge des zugeschalteten Kalibriergewichts 123 beziehungsweise den dadurch eingekoppelten Gelenkstellen 113 des Kalibrierungshebels 220 die Genauigkeit der Messwerte geringfügig beeinflusst, weshalb für den höheren Lastbereich eine geringere Auflösung beziehungsweise eine Herabstufung der Genauigkeitsklasse vorgesehen sein kann. Alle vorangehend beschriebenen Vorgänge können mittels der Waagenelektronik lastabhängig automatisch gesteuert werden, ohne dass sich der Benutzer darum kümmern muss, welcher Teilbereich zu wählen ist.

Selbstverständlich kann das Kalibriergewicht 123 auch direkter auf den Lastaufnahmebereich 112 einwirken, wie dies in der Figur 3 dargestellt ist. Diese zeigt eine Wägezelle 300 mit einer dritten Ausführung der Kraftübertragungsvorrichtung 310 in der Aufsicht. Mit Ausnahme des Kalibrierungshebels 320 und des unidirektionalen Koppelelements 324, entsprechen alle dargestellten Elemente den Elementen von Figur 1 und werden nachfolgend nicht mehr beschrieben. Das Hebelwerk weist einen Hebel 316 auf, welcher zwischen dem Lastaufnahmebereich 112 und dem Messaufnehmer 130 angeordnet ist. Der Kalibrierungshebel 320 mit einem Kalibriergewicht 123 ist mit dem feststehenden Bereich 311 gelenkig verbunden und bezogen auf die Gebrauchslage der Wägezelle 300 unterhalb des Lastaufnahmebereichs 112 angeordnet. Die Kraftübertragung vom Kalibrierungshebel 320 zum Lastaufnahmebereich 112 erfolgt über das Zugkräfte übertragende unidirektionale Koppelelement 324. Je kürzer der zweite Hebelarm 322 des Kalibrierungshebels 320 im Verhältnis zum ersten Kalibrierungshebelarm 321 gewählt ist, desto grösser ist die durch das unidirektionale Koppelelement 324 übertragene Kalibrierkraft auf den Lastaufnahmebereich 112.

Figur 4 zeigt in schematischer Darstellung eine Wägezelle 400 mit einer vierten Ausführung der Kraftübertragungsvorrichtung 410 in der Aufsicht, welche ein zwischen dem Lastaufnahmebereich 112 und dem Messaufnehmer 130 angeordnetes Hebelwerk mit zwei Hebeln 416, 417 zur Untersetzung der auf den Lastaufnahmebereich 112 wirkenden Kraft aufweist. Auch Figur 4 weist Bauteile auf, die mit einigen Bauteilen in den vorangehenden Figuren identisch sind und deshalb dieselben Bezugszeichen aufweisen oder nicht beschrieben sind. Der erste Hebel 416 ist durch ein Koppelelement 418 kraftübertragend mit dem zweiten Hebel 417 verbunden. Zwischen dem Koppelelement 418 und einem am feststehenden Bereich 411 beweglich gelagerten Kalibrierungshebel 420 ist ein unidirektionales Koppelelement 424 angeordnet, welches nur Druckkräfte übertragen kann. Die dargestellte Ausführung führt dazu, dass durch den Versatz der Kraftwirkungslinien des Koppelelements und des seitlich damit verbundenen unidirektionalen Koppelelements ein Drehmoment erzeugt wird, welches die Lagerstellen 460, 461 der Hebel 416, 417 belasten. Vorzugsweise sind deshalb Lösungen anzustreben, bei denen die beiden Kraftwirkungslinien zusammenfallen.

Um den Austausch des Messaufnehmers 130 zu erleichtern, weist der feststehende Bereich 411 einen Durchbruch auf, durch welchen der zweite Hebel 417 hindurchreicht, so dass der Messaufnehmer 130 auf der den Parallellenkern 114, 115 abgewandten Seite des feststehenden Bereichs 411 angeordnet werden kann.

Figur 5 zeigt eine schematische Darstellung einer Wägezelle 500 mit einer fünften Ausführung der Kraftübertragungsvorrichtung 510 in der Aufsicht. Diese weist ein zwischen dem Lastaufnahmebereich 112 und dem Messaufnehmer 130 angeordnetes Hebelwerk mit drei Hebeln 516, 517, 518 zur Untersetzung der auf den Lastaufnahmebereich 112 wirkenden Kraft auf. Wie bereits in Figur 4 dargestellt und weiter oben beschrieben, sind der erste Hebel 516 mittels eines zweiten Koppelelements 519 mit dem zweiten Hebel 517 und der zweite Hebel 517 mittels eines dritten Koppelelements 529 mit dem dritten Hebel 518 kraftübertragend verbunden. Ein unidirektionales Koppelelement 524, welches nur Zugkräfte übertragen kann, ist zwischen dem Hebelwerk und einem Kalibrierungshebel 520 angeordnet. Die Krafteinleitung erfolgt beim zweiten Koppelelement 519, welches den ersten Hebel 516 mit dem zweiten Hebel 517 verbindet, wobei das unidirektionale Koppelelement 524 nicht wie in Figur 4 parallel, sondern in Serie zum zweiten Koppelelement 519 angeordnet ist. Durch die serielle Anordnung wird vermieden, dass während des Kalibrierens ein Drehmoment auf das zweite Koppelelement 519 wirkt, wie dies bei dem in Figur 4 dargestellten zweiten Koppelelement 419 sein kann.

In Figur 6 ist eine monolithisch ausgebildete Kraftübertragungsvorrichtung 610 in der Aufsicht dargestellt. Bei einem durch seine Umrisslinien begrenzten Materialblock 699 sind mittels dünner, orthogonal zur Zeichnungsebene den Materialblock 699 durchdringender Schnittlinien ein erster Hebel 616, ein zweiter Hebel 617, ein Kalibrierungshebel 620, ein erster Parallellenker 614 ein zweiter Parallellenker 615, der feststehende Bereich 611 der Lastaufnahmebereich 612 sowie ein erstes Koppelelement und ein zweites Koppelelement ausgebildet. Alle diese mittels Schnittlinien ausgebildeten Teile sind mittels ebenfalls durch Schnittlinien geschaffene Dünnstellenbiegelager miteinander in geeigneter Weise verbunden, so dass die Kraftübertragungsvorrichtung 610 im Wesentlichen einen am feststehenden Bereich 611 geführten Lastaufnahmebereich 612 und ein Hebelwerk 616, 617 sowie einen Kalibrierungshebel 620 aufweist. Der zweite Hebel wird mittels einer nicht dargestellten Hebelarmverlängerung mit dem nicht dargestellten Messaufnehmer verbunden. Zur Befestigung der Hebelarmverlängerung sind im zweiten Hebel zwei Bohrungen 641 vorhanden. Auch der Kalibrierungshebel weist zwei Bohrungen 642 auf, an denen ein Kalibriergewicht befestigt werden kann. Zwischen dem ersten Hebel 616 und dem Kalibrierungshebel 620 ist ein unidirektionales Koppelelement 624 angeordnet, das zwei Teilkoppelelemente 625, 626 aufweist, die mittels eines flexiblen Scharniers 648 miteinander verbunden sind. Obwohl die beiden Teilkoppelelemente 625, 626 physisch miteinander verbunden sind, ist das unidirektionale Koppelelement 624 erfindungsgemäss zweigeteilt. Die Öffnungsrichtung des flexiblen Scharniers 648 ist der Mittellängsachse des ersten und zweiten Dünnstellenbiegelagers 627, 628 entsprechend angeordnet. Zur Übertragung von Druckkräften ist am ersten Teilkoppelelement 625 ein Vorsprung 643 und am zweiten Teilkoppelelement 626 eine zum Vorsprung ausgerichtete Berührungsfläche ausgebildet.

Figur 7 zeigt eine mögliche Ausgestaltung eines unidirektionalen Koppelelements 724 in seiner Gebrauchslage, mit welchem nur eine Zugkraft übertragbar ist. Ein erstes Teilkoppelelement 725 ist mittels eines ersten Dünnstellenbiegelagers 727 mit dem teilweise dargestellten Lastaufnahmebereich oder dem Hebelwerk einer Kraftübertragungsvorrichtung verbunden. Aufgrund der hängenden Lage des ersten Teilkoppelelements 725 kann das erste Dünnstellenbiegelager 727 sehr schlank ausgestaltet werden. Ferner weist das erste Teilkoppelelement 725 ein erstes Zugelement 741 auf.

Das zweite Teilkoppelelement 726 ist durch ein zweites Dünnstellenbiegelager 728 mit dem teilweise dargestellten Kalibrierungshebel 720 verbunden. Das zweite Dünstellenbiegelager 728 welches in stehender Ausrichtung verbleibt, muss eine höhere Federkonstante aufweisen und dementsprechend massiver ausgestaltet sein, als das erste Dünstellenbiegelager 727. Bei ausreichender Abstimmung auf die Betriebsverhältnisse der Kraftübertragungsvorrichtung lenkt das zweite Teilkoppelelement 726 infolge der Schwerkraft oder durch Trägheits- und Beschleunigungskräfte während des Betriebes nicht aus.

Das zweite Teilkoppelelement 726 weist ein zweites Zugelement 742 auf. Sobald eine Kraft vom zweiten Dünnstellenbiegelager 728 zum ersten Dünnstellenbiegelager 727 übertragen werden soll, greift nach kleinem relativem Verschiebeweg voneinander das erste Zugelement 741 in das zweite Zugelement 742 ein. Zur noch sichereren Übertragung von Zugkräften kann das erste Zugelement 741 einen Vorsprung 743 und das zweite Zugelement 742 eine Pfanne 744 aufweisen. Sobald das erste Zugelement 741 und das zweite Zugelement 742 ineinander greifen, ist der Vorsprung 743 zur Pfanne 744 durch ihre Formgebung selbstzentrierend ausgerichtet und der Vorsprung 743 mit der Pfanne 744 in Anlage.

Figur 8 zeigt eine mögliche Ausgestaltung eines unidirektionalen Koppelelements 824 in seiner Gebrauchslage, mit welchem nur eine Druckkraft übertragbar ist. Ein erstes Teilkoppelelement 825 ist mittels eines ersten Dünnstellenbiegelagers 827 mit dem teilweise dargestellten Lastaufnahmebereich oder dem Hebelwerk einer Kraftübertragungsvorrichtung verbunden.

Ein zweites Teilkoppelelement 826 ist durch ein zweites Dünnstellenbiegelager 828 mit dem teilweise dargestellten Kalibrierungshebel 820 verbunden. Da beim Kalibriervorgang Druckkräfte übertragen werden und ein Ausknicken der beiden Teilkoppelelemente 825, 826 zueinander unter Last unbedingt zu vermeiden ist, muss das unidirektionale Koppelelement 824 eine innere Stabilität aufweisen. Das zweite Teilkoppelelement 826 weist eine gegen das erste Teilkoppelelement 825 gerichtete Fläche 841 mit zwei aus der Fläche 841 ragenden Vorsprüngen 843 auf, welche in Bezug zur Mittellängsachse X des zweiten Dünnstellenbiegelagers 828 spiegelsymmetrisch angeordnet sind. Ferner weist das erste Teilkoppelelement 825 zwei gegen das zweite Koppelelement 826 gerichtete Auflageflächen 842 auf, auf welchen je einer der beiden Vorsprünge 843 abstützen können. Durch diese Ausgestaltung sind in einer Ebene orthogonal zu den Mittellängsachsen X der beiden Dünnstellenbiegelager 827, 828 zwei Berührungsstellen vorhanden, welche dem unidirektionalen Koppelelement 824 zur Übertragung einer Druckkraft eine innere Stabilität verleihen.

Wie in Figur 8 gezeigt, kann mittels dieser Ausgestaltung das erste Teilkoppelelement 825 und das zweite Teilkoppelelement 826 beim Kalibriervorgang zueinander ausgerichtet werden. Dadurch sind Verschiebungen orthogonal zu den Mittellängsachsen **X** der Dünnstellenbiegelager 827, 828 verhinderbar. Zwecks der Ausrichtungsfunktion sind am ersten Teilkoppelelement 825 die beiden Auflageflächen 842 in stumpfem Winkel zueinander geneigt ausgebildet. Jedoch sind der Neigung der Auflageflächen 842 aufgrund der notwendigen Forderung nach innerer Stabilität des unidirektionalen Koppelelements 824 bestimmte Grenzen gesetzt.

Diese Grenzen richten sich nach den geometrischen Verhältnissen des unidirektionalen Koppelelements 824, wobei der jeweils zwischen einer Auflagefläche 842 und der Mittellängsachse **X** des Dünnstellenbiegelagers 827 eingeschlossene Winkel $\alpha$ zu betrachten ist. Dabei entspricht **b** dem rechtwinkligen Abstand einer Berührungsstelle beziehungsweise eines Vorsprungs 843 zur Mittellängsachse des Dünnstellenbiegelagers und **s** dem Abstand einer Berührungsstelle beziehungsweise Auflagefläche 842 zur Biegeachse **Y** des ersten Dünnstellenbiegelagers 827.

$$\chi = \arcsin (b/s)$$

$$\alpha = (90° - \chi) = \arccos (b/s)$$

Für den Winkel $\alpha$ gilt:

$$90° \geq \alpha \geq \arccos (b/s)$$

Gemäss der vorangehend erläuterten Definition des Winkels ist die innere Stabilität dann erreicht, wenn sich die Wirkungslinien **W** der durch die Berührungsstellen übertragenen Kräfte nicht innerhalb des ersten Teilkoppelelements 825 schneiden. Der Grenzfall $\alpha$ arccos (b/s) ist in Figur 8 dargestellt.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Unter anderem sind Ausführungsformen der Erfindung denkbar, bei welchen beispielsweise mehrere Kalibriergewichte vorhanden sind, welche in der erfindungsgemässen Weise mittels unidirektionaler Koppelelemente unabhängig voneinander an gleicher Stelle oder an unterschiedlichen Stellen in ein Hebelwerk eingekoppelt werden können. Dadurch ist beispielsweise der Wägebereich einer Waage nahezu beliebig erweiterbar. Selbstverständlich sind auch in zwei oder mehrere Segmente vertikal geteilte, unidirektionale Koppelelemente, Kalibrierungshebel und Kalibriergewichte möglich, die unabhängig voneinander betätigt werden können. Auch sind Ausführungen möglich, bei welchen der Kalibrierungshebel und das Kalibriergewicht monolithisch ausgebildet sind.

Weitere Vorteile der erfindungsgemässen Vorrichtung sind dadurch gegeben, dass mittels der Variierung der Kalibrierungshebelarmlängen unterschiedliche Lastbereiche mit denselben Teilen abdeckbar sind, wenn das Kalibriergewicht entlang des Kalibrierungshebelarms an vom Drehpunkt des Kalibrierungshebels verschieden beabstandeten Stellen montiert werden kann. Gegebenenfalls kann auch eine Justierschraube zwischen dem Kalibriergewicht und dem Kalibrierungshebel angeordnet sein, welche der genauen Einstellung des Abstandes zwischen dem Kalibriergewicht und dem Drehpunkt des Kalibrierungshebels dient. Dadurch ist die Einstellbarkeit der Kalibrierungskraft durch genaues Verschieben des Gewichtes möglich, so dass mehrere Kalibriervorrichtungen trotz durch Fertigungstoleranzen und inhomogener Materialien verursachte Abweichungen dieselbe Kalibrierungskraft aufweisen.

**Bezugszeichenliste**

| | |
|---|---|
| 500, 400, 300, 200, 100 | Wägezelle |
| 610, 510, 410, 310, 210, 110 | Kraftübertragungsvorrichtung |
| 611, 411, 311, 111 | feststehender Bereich |
| 612, 112 | Lastaufnahmebereich |
| 113 | Gelenkstelle |
| 614, 114 | erster Parallellenker |
| 615, 115 | zweiter Parallellenker |
| 616, 316, 116 | Hebel |
| 117 | kurzer Hebelarm |
| 118 | langer Hebelarm |

| 119 | erstes Koppelelement |
| 820, 720, 620, 520, 420, 320, 220, 120 | Kalibrierungshebel |
| 321, 221, 121 | erster Kalibrierungshebelarm |
| 322, 222, 122 | zweiter Kalibrierungshebelarm |
| 123 | Kalibriergewicht |
| 824, 724, 624, 524, 424, 324, 224, 124 | unidirektionales Koppelelement |
| 825, 725, 625, 225, 125 | erstes Teilkoppelelement |
| 826, 726, 626, 226, 126 | zweites Teilkoppelelement |
| 827, 727, 627, 227, 127 | erstes Dünnstellenbiegelager |
| 828, 728, 628, 228, 128 | zweites Dünnstellenbiegelager |
| 150 | Kalibriergewichtsauflegevorrichtung |
| 151 | Kurvenscheibe |
| 412 | Durchbruch |
| 516,416 | erster Hebel |
| 617,517,417 | zweiter Hebel |
| 519, 419 | zweites Koppelelement |
| 461,460 | Lagerstelle |
| 518 | dritter Hebel |
| 529 | drittes Koppelelement |
| 641 | Bohrungen |
| 642 | Bohrungen |
| 648 | flexibles Scharnier |
| 843,743,643 | Vorsprung |
| 699 | Materialblock |
| 741 | erstes Zugelement |
| 742 | zweites Zugelement |
| 744 | Pfanne |
| 841 | Fläche |
| 842 | Auflagefläche |

| s | Abstand zwischen Vorsprung und Y |
| b | Abstand zwischen Vorsprung und X |
| W | Wirkungslinie |
| X | Mittellängsachse |
| Y | Biegeachse |
| $\alpha$ | Winkel zwischen Auflagefläche und X |
| $\chi$ | Winkel zwischen W und X |

**Patentansprüche**

1. Kraftübertragungsvorrichtung (110, 210, 310, 410, 510, 610) eines gravimetrischen Messinstruments, mit einem feststehenden Bereich (111, 311, 411, 611) und mit einem Lastaufnahmebereich (112, 612), welcher Lastaufnahmebereich (112, 612) direkt oder durch mindestens ein Koppelelement (119, 419, 519, 529) und mindestens einen Hebel (116, 316, 416, 516, 518, 616) kraftübertragend mit einem am feststehenden Bereich (111, 311, 411, 611) angeordneten Messaufnehmer (130) verbunden ist, **dadurch gekennzeichnet, dass** die Kraftübertragungsvorrichtung (110, 210, 310, 410, 510, 610) einen Kalibrierungshebel (120, 220, 320, 420, 520, 620, 720, 820) aufweist, dessen Gelenkstelle (113) am feststehenden Bereich (111, 311, 411, 611) abgestützt ist, dessen erster Kalibrierungshebelarm (121, 221, 321) mit einem Kalibriergewicht (123) fest verbunden ist und dessen zweiter Kalibrierungshebelarm (122, 222, 322) durch ein unidirektionales Koppelelement (124, 224, 324, 424, 524, 624, 724, 824) mit dem Lastaufnahmebereich (112, 612) oder mit dem mindestens einen Koppelelement (119, 419, 519, 529) oder mit einem Hebelarm (117,118) des mindestens einen Hebels (116, 316, 416, 516, 518, 616) verbunden ist, wobei das unidirektionale Koppelelement (124, 224, 324, 424, 524, 624, 724, 824) in ein erstes Teilkoppelelement (125, 225, 625, 725, 825) und in ein zweites Teilkoppelelement (126, 226, 626, 726, 826) zweigeteilt ist, das erste Teilkoppelelement (125, 225, 625, 725, 825) mittels eines ersten Dünnstellenbiegelagers (127, 227, 627, 727, 827) am Lastaufnahmebereich (112, 612) oder am Koppelelement (119, 419, 519, 529) oder am Hebelarm festgelegt und das zweite Teilkoppelelement (126, 226, 626, 726, 826) mittels eines zweiten Dünnstellenbiegelagers (128, 228, 628, 728, 828) am zweiten Kalibrierungshebelarm (122, 222, 322) festgelegt ist und die Teilkoppelelemente (125, 126, 225, 226, 625, 626, 725, 726, 825, 826) derart zueinander ausgerichtet sind, dass infolge der Zweiteilung des unidirektionalen Koppelelements (124, 224, 324, 424, 524, 624, 724, 824) vom zweiten Dünnstellenbiegelager (128, 228, 628, 728, 828) zum ersten Dünnstellenbiegelager (127, 227, 627, 727, 827) nur eine Zugkraft oder nur eine Druckkraft übertragbar ist.

2. Kraftübertragungsvorrichtung (110, 210, 310, 410, 510, 610) nach Anspruch 1, **dadurch gekennzeichnet, dass** das zweite Teilkoppelelement (126, 226, 626, 726, 826) zur Übertragung von Druckkräften eine gegen das erste Teilkoppelelement (125, 225, 625, 725, 825) gerichtete Fläche (841) mit zwei aus der Fläche (841) ragenden Vorsprüngen (843) aufweist, welche in Bezug zur Mittellängsachse X des zweiten Dünnstellenbiegelagers (128, 228, 628, 728, 828) spiegelsymmetrisch angeordnet sind, und dass das erste Teilkoppelelement (125, 225, 625, 725, 825) zwei gegen das zweite Teilkoppelelement (126, 226, 626, 726, 826) gerichtete Auflageflächen (842) aufweist, welche in Bezug zur Mittellängsachse X des ersten Dünnstellenbiegelagers (127, 227, 627, 727, 827) spiegelsymmetrisch angeordnet sind.

3. Kraftübertragungsvorrichtung (110, 210, 310, 410, 510, 610) nach Anspruch 2, **dadurch gekennzeichnet, dass** der jeweils zwischen einer Auflagefläche (842) und der Mittellängsachse X eingeschlossene Winkel $\alpha$ die Bedingung $90° \geq \alpha \geq \arccos(b/s)$ erfüllt.

4. Kraftübertragungsvorrichtung (110, 210, 310, 410, 510, 610) nach Anspruch 1, **dadurch gekennzeichnet, dass** das erste Teilkoppelelement (125, 225, 625, 725, 825) ein erstes Zugelement (741) mit einem Vorsprung (743) aufweist und das zweite Teilkoppelelement (126, 226, 626, 726, 826) ein zweites Zugelement (742) mit einer Pfanne (744) aufweist, wobei das erste Zugelement (741) und das zweite Zugelement (742) ineinander greifen, der Vorsprung (743) zur Pfanne (744) ausgerichtet ist und bei Übertragung von Zugkräften der Vorsprung (743) mit der Pfanne (744) in Anlage ist.

5. Kraftübertragungsvorrichtung (110, 210, 310, 410, 510, 610) nach Anspruch 1, **dadurch gekennzeichnet, dass** das erste Teilkoppelelement (125, 225, 625, 725, 825) und das zweite Teilkoppelelement (126, 226, 626, 726, 826) mittels eines flexiblen Scharniers (648) miteinander verbunden sind, wobei dessen Öffnungsrichtung der Mittellängsachse X des ersten und zweiten Dünnstellenbiegelagers (127, 128, 227, 228, 627, 628, 727, 728, 827, 828) entsprechend angeordnet ist, und dass zur Übertragung von Zug- oder Druckkräften am ersten Teilkoppelelement (125, 225, 625, 725, 825) ein Vorsprung (643) und am zweiten Teilkoppelelement (126, 226, 626, 726, 826) eine zum Vorsprung (643) ausgerichtete Berührungsfläche ausgebildet ist.

6. Kraftübertragungsvorrichtung (110, 210, 310, 410, 510, 610) nach einem der Ansprüche 1 bis 5, **dadurch gekennzeichnet, dass** in deren Betriebsstellung der Lastaufnahmebereich (112, 612) mittels mindestens eines oberen Parallellenkers (114, 614) und mittels mindestens eines unteren Parallellenkers (115, 615) am feststehenden (111, 311, 411, 611) Bereich in vertikaler Richtung geführt ist.

7. Kraftübertragungsvorrichtung (110, 210, 310, 410, 510, 610) nach einem der Ansprüche 1 bis 6, **dadurch gekennzeichnet, dass** mindestens der Lastaufnahmebereich (112, 612), der feststehende Bereich (111, 311, 411, 611), der Kalibrierungshebel (120, 220, 320, 420, 520, 620, 720, 820) und das unidirektionale Koppelelement (124, 224, 324, 424, 524, 624, 724, 824) zusammen monolithisch ausgebildet sind.

8. Gravimetrisches Messinstrument mit einem Messaufnehmer (130), mit einem Kalibriergewicht (123) und mit einer Kraftübertragungsvorrichtung (110, 210, 310, 410, 510, 610) nach einem der Ansprüche 1 bis 7.

9. Gravimetrisches Messinstrument nach Anspruch 8, **dadurch gekennzeichnet, dass** die Gewichtskraft des Kalibriergewichts (123) durch die Kraftübertragungsvorrichtung (110, 210, 310, 410, 510, 610) in derselben Richtung wie eine auf den Lastaufnahmebereich (112, 612) wirkende Kraft auf den Messaufnehmer (130) übertragbar ist.

10. Gravimetrisches Messinstrument nach Anspruch 8, **dadurch gekennzeichnet, dass** die Gewichtskraft des Kalibriergewichts (123) durch die Kraftübertragungsvorrichtung (110, 210, 310, 410, 510, 610) in der entgegengesetzten Richtung wie eine auf den Lastaufnahmebereich (112, 612) wirkende Kraft auf den Messaufnehmer (130) übertragbar ist.

11. Gravimetrisches Messinstrument nach einem der Ansprüche 8 bis 10, **dadurch gekennzeichnet, dass** das Kalibriergewicht (123) aus einem korrosionsbeständigen Material der Dichte $p = 8.0$ Kg/dm$^3$ gefertigt ist.

12. Gravimetrisches Messinstrument nach einem der Ansprüche 8 bis 10, **dadurch gekennzeichnet, dass** das Kalibriergewicht (123) aus demselben Material wie die Kraftübertragungsvorrichtung (110, 210, 310, 410, 510, 610) gefertigt ist, und dass zur Kompensation des Dichteeinflusses eine Ergänzungsmasse mit dem Kalibriergewicht (123) verbunden ist und/oder ein Drucksensor zur Erfassung des Umgebungsdrucks des gravimetrischen Messinstruments vorhanden ist.

**Claims**

1. Force-transmitting device (110, 210, 310, 410, 510, 610) of a gravimetric measuring instrument, with a stationary part (111, 311, 411, 611) and a load-receiving part (112, 612), said load-receiving part (112, 612) being force-transmitting linked, either directly or by way of at least one coupling element (119, 419, 519, 529) and at least one lever (116, 316, 416, 516, 518, 616), to a measurement transducer (130) which is arranged on the stationary part (111, 311, 411, 611), **characterized in that** the force-transmitting device (110, 210, 310, 410, 510, 610) comprises a calibration lever (120, 220, 320, 420, 520, 620, 720, 820) which fulcrum (113) is based on the stationary part (111, 311, 411, 611), which first calibration lever arm (121, 221, 321) is solidly connected to a calibration weight (123) and which second calibration lever arm (122, 222, 322) is connected byway of a unidirectional coupling element (124, 224, 324, 424, 524, 624, 724, 824) to the load-receiving part (112, 612) or to the at least one coupling element (119, 419, 519, 529) or to a lever arm (117, 118) of the at least one lever (116, 316, 416, 516, 518, 616), wherein the unidirectional coupling element (124, 224, 324, 424, 524, 624, 724, 824) is split into a first coupling element part (125, 225, 625, 725, 825) and a second coupling element part (126, 226, 626, 726, 826), wherein further the first coupling element part (125, 225, 625, 725, 825) is connected through a first flexure pivot (127, 227, 627, 727, 827) to a fixed place on the load-receiving part (112, 612) or on the coupling element (119, 419, 519, 529) or on the lever arm, while the second coupling element part (126, 226, 626, 726, 826) is connected through a second flexure pivot (128, 228, 628, 728, 828) to a fixed place on the second calibration arm (122, 222, 322), said coupling element parts (125, 126, 225, 226, 625, 626, 725, 726, 825, 826) being aligned with each other in such a way that, due to the unidirectional coupling element (124, 224, 324, 424, 524, 624, 724, 824) being split into two parts, the force that can be transmitted from the second flexure pivot (128, 228, 628, 728, 828) to the first flexure pivot (127, 227, 627, 727, 827) is exclusively a tensile force or exclusively a compressive force.

2. Force-transmitting device (110, 210, 310, 410, 510, 610) according to claim 1, **characterized in that** the second coupling element part (126, 226, 626, 726, 826) comprises, as a means for the transmission of compressive forces, a surface (841) which faces towards the first coupling element part (125, 225, 625, 725, 825), with two projections (843) that protrude from the surface (841) and are arranged mirror-symmetrically relative to the central longitudinal axis X of the second flexure pivot (128, 228, 628, 728, 828), and further **characterized in that** the first coupling element part (125, 225, 625, 725, 825) has two receiving surfaces (842) facing towards the second coupling element part (126, 226, 626, 726, 826), which are arranged mirror-symmetrically relative to the central longitudinal axis X of the first flexure pivot (127, 227, 627, 727, 827).

3. Force-transmitting device (110, 210, 310, 410, 510, 610) according to claim 2, **characterized in that** the angle $\alpha$ enclosed between each of the receiving surfaces (842) and the central longitudinal axis X satisfies the condition: $90° \geq \alpha \geq arccos (b/s)$.

4. Force-transmitting device (110, 210, 310, 410, 510, 610) according to claim 1, **characterized in that** the first coupling element part (125, 225, 625, 725, 825) comprises a first traction element (741) with a projection (743), and the second coupling element part (126, 226, 626, 726, 826) comprises a second traction element (742) with a V-shaped bearing (744), wherein the first coupling element part (741) and the second coupling element part (742) are hooked into each other, the projection (743) is aligned with the V-shaped bearing (744) and, when tensile forces are being transmitted, the projection (743) is in force-transmitting contact with the V-shaped bearing (744).

5. Force-transmitting device (110, 210, 310, 410, 510, 610) according to claim 1, **characterized in that** the first coupling element part (125, 225, 625, 725, 825) and the second coupling element part (126, 226, 626, 726, 826) are connected to each other by means of a flexible hinge (648), wherein the opening direction of the flexible hinge is arranged in accordance with the central longitudinal axis X of the first and second flexure pivots (127, 128, 227, 228, 627, 628, 727, 728, 827, 828), and wherein for the transmission of tensile or compressive forces, a projection (643) is formed on the first coupling element part (125, 225, 625, 725, 825) and a contact surface, oriented to cooperate with the projection (643), is formed on the second coupling element part (126, 226, 626, 726, 826).

6. Force-transmitting device (110, 210, 310, 410, 510, 610) according to one of the claims 1 to 5, **characterized in that** with the force-transmitting device (110, 210, 310, 410, 510, 610) set up in operating position, the load-receiving part (112, 612) is guided in vertical movement by at least one upper parallel guide (114, 614) and at least one lower parallel guide (115, 615) linking the load-receiving part (112, 612) to the stationary part (111, 311, 411, 611).

7. Force-transmitting device (110, 210, 310, 410, 510, 610) according to one of the claims 1 to 6, **characterized in that** at least the load-receiving part (112, 612), the stationary part (111, 311, 411, 611), the calibration lever (120, 220, 320, 420, 520, 620, 720, 820) and the unidirectional coupling element (124, 224, 324, 424, 524, 624, 724, 824) are designed to form a monolithic unit together.

8. Gravimetric measuring instrument with a measurement transducer (130), with a calibration weight (123), and with a force-transmitting device (110, 210, 310, 410, 510, 610) according to one of the claims 1 to 7.

9. Gravimetric measuring instrument according to claim 8, **characterized in that** the weight force of the calibration weight (123) is transmitted through the force-transmitting device (110, 210, 310, 410, 510, 610) to the measurement transducer (130) in the same direction as a force acting on the load-receiving part (112, 612).

10. Gravimetric measuring instrument according to claim 8, **characterized in that** the weight force of the calibration weight (123) is transmitted through the force-transmitting device (110, 210, 310, 410, 510, 610) to the measurement transducer (130) in the opposite direction compared to a force acting on the load-receiving part (112, 612).

11. Gravimetric measuring instrument according to one of the claims 8 to 10, **characterized in that** the calibration weight (123) is made of a corrosion-resistant material with a density of p = 8.0 kg/dm3.

12. Gravimetric measuring instrument according to one of the claims 8 to 10, **characterized in that** the calibration weight (123) is made of the same material as the force-transmitting device (110, 210, 310, 410, 510, 610), and that in order to compensate for the influence of density, a supplemental mass is connected to the calibration weight (123) and/or a pressure sensor is provided for the measurement of the ambient pressure of the gravimetric measurement instrument.

**Revendications**

1. dispositif de transmission de force (110, 210, 310, 410, 510, 610) d'un instrument de mesure gravimétrique, avec une région fixe (111, 311, 411, 611) et avec une région de réception de charge (112, 612), ladite région de réception de charge (112, 612) étant reliée avec transmission de force à un capteur de mesure (130) agencé sur la région fixe (111, 311, 411, 611), directement ou par le biais d'au moins un élément d'accouplement (119, 419, 519, 529) et d'au moins un levier (116, 316, 416, 516, 518, 616), **caractérisé en ce que** le dispositif de transmission de force (110, 210, 310, 410, 510, 610) comporte un levier de calibrage (120, 220, 320, 420, 520, 620, 720, 820) dont le point d'articulation (113) s'appuie sur la région fixe (111, 311, 411, 611), dont le premier bras de levier de calibrage (121, 221, 321) est reliée fixement à un poids de calibrage (123) et dont le deuxième bras de levier de calibrage (122, 222, 322) est relié à la région de réception de charge (112, 612) ou à l'au moins un élément d'accouplement (119, 419, 519, 529) ou au bras de levier de levier (117, 118) de l'au moins un levier (116, 316, 416, 516, 518, 616) par un élément d'accouplement unidirectionnel (124, 224, 324, 424, 524, 624, 824), l'élément d'accouplement unidirectionnel (124, 224, 324, 424, 524, 624, 824) étant divisé en un premier élément d'accouplement partiel (125, 225, 625, 725, 825) et en un deuxième élément d'accouplement partiel (126, 226, 626, 726, 826), le premier élément d'accouplement partiel (125, 225, 625, 725, 825) étant fixé sur la région de réception de charge (112, 612) ou sur l'élément d'accouplement (119, 419, 519, 529) ou sur le bras de levier au moyen d'un premier palier élastique de partie mince (127, 227, 627, 727, 827) et le deuxième élément d'accouplement partiel (126, 226, 626, 726, 826) est fixé sur le deuxième bras de levier de calibrage (122, 222, 322) au moyen d'un deuxième palier élastique de partie mince (128, 228, 628, 728, 828), et les éléments d'accouplement partiels (125, 126, 225, 226, 625, 626, 725, 726, 825, 826) sont orientés de telle façon les uns par rapport aux autres, que seule une force de traction ou seule une force de pression peut être transmise du deuxième palier élastique pour partie mince (128, 228, 628, 728, 828) au premier palier élastique pour partie mince (127, 227, 627, 727, 827) suite à la division de l'élément d'accouplement unidirectionnel (124, 224, 324, 424, 524, 624, 824).

2. Dispositif de transmission de force (110, 210, 310, 410, 510, 610) selon la revendication 1, **caractérisé en ce que** pour la transmission de forces, le deuxième élément d'accouplement partiel (126, 226, 626, 726, 826) comporte une surface (841) orientée contre le premier élément d'accouplement partiel (125, 225, 625, 725, 825), avec deux saillies (843) sortant de la surface (841), lesquelles sont agencées de façon symétrique par rapport à l'axe longitudinal médian X du deuxième palier élastique pour partie mince (128, 228, 628, 728, 828), et **en ce que** le premier élément d'accouplement partiel (125, 225, 625, 725, 825) comporte deux surfaces d'appui (842) orientées contre le deuxième élément d'accouplement partiel (126, 226, 626, 726, 826), lesquelles sont agencées de façon symétrique par rapport à l'axe longitudinal médian X du premier palier élastique pour partie mince (127, 227, 627, 727, 827).

3. Dispositif de transmission de force (110, 210, 310, 410, 510, 610) selon la revendication 2, **caractérisé en ce que** l'angle $\alpha$ respectivement inclus entre une surface d'appui (842) et l'axe longitudinal médian X remplit la condition $90° \geq \alpha \geq arcos (b/s)$.

4. Dispositif de transmission de force (110, 210, 310, 410, 510, 610) selon la revendication 1, **caractérisé en ce que** le premier élément d'accouplement partiel (125, 225, 625, 725, 825) comporte un premier élément de traction (741) avec une saillie (743) et le deuxième élément d'accouplement partiel (126, 226, 626, 726, 826) comporte un deuxième élément de traction avec une cupule (744), le premier élément de traction (741) et le deuxième élément de traction (742) étant en prise l'un avec l'autre, la saillie (743) étant orientée vers la poche (744), et la saillie (743) entrant en contact avec la cupule (744) lors de la transmission de forces de traction.

5. Dispositif de transmission de force (110, 210, 310, 410, 510, 610) selon la revendication 1, **caractérisé en ce que** le premier élément d'accouplement partiel (125, 225, 625, 725, 825) et le deuxième élément d'accouplement partiel (126, 226, 626, 726, 826) sont reliés entre eux au moyen d'une charnière souple (648), dont la direction d'ouverture s'étend de manière à correspondre avec l'axe longitudinal médian X des premier et deuxième paliers élastiques de partie mince (127, 128, 227, 228, 627, 628, 728, 828), et **en ce que** pour la transmission de forces de traction ou de pression, une saillie (643) est formée sur le premier élément d'accouplement partiel (125, 225, 625, 725, 825) et une surface de contact orientée vers la saillie (643) est formée sur le deuxième élément d'accouplement partiel (126,226,626,726,826).

**6.** Dispositif de transmission de force (110, 210, 310, 410, 510, 610) selon l'une des revendications 1 à 5, **caractérisé en ce que** dans la position de marche de celui-ci, la région de réception de charge (112, 612) est guidée dans une direction verticale sur la région fixe (111, 311, 411, 611) au moyen d'au moins un guide parallèle supérieur (114, 614) et d'au moins un guide parallèle inférieur (115, 615).

**7.** Dispositif de transmission de force (110, 210, 310, 410, 510, 610) selon l'une des revendications 1 à 6, **caractérisé en ce qu'**au moins la région de réception de charge (112, 612), la région fixe (111, 311, 411, 611), le levier de calibrage (120, 220, 320, 420, 520, 620, 720, 820) et l'élément d'accouplement unidirectionnel (124, 224, 324, 424, 524, 624, 824) sont conçus solidairement de façon monolithique.

**8.** Instrument de mesure gravimétrique avec un capteur de mesure (130), avec un poids de calibrage (123) et avec un dispositif de transmission de force (110, 210, 310, 410, 510, 610) selon l'une des revendications 1 à 7.

**9.** Instrument de mesure gravimétrique selon la revendication 8, **caractérisé en ce que** la force pondérale du poids de calibrage (123) peut être transmise au capteur de mesure (130) par le dispositif de transmission de force (110, 210, 310, 410, 510, 610) dans la même direction qu'une force agissant sur la région de réception de charge (112, 612).

**10.** Instrument de mesure gravimétrique selon la revendication 8, **caractérisé en ce que** la force pondérale du poids de calibrage (123) peut être transmise au capteur de mesure (130) par le dispositif de transmission de force (110, 210, 310, 410, 510, 610) dans la direction opposée à une force agissant sur la région de réception de charge (112, 612).

**11.** Instrument de mesure gravimétrique selon l'une des revendications 8 à 10, **caractérisé en ce que** le poids de calibrage (123) est réalisé à partir d'un matériau résistant à la corrosion, présentant une densité p = 8,0 Kg/dm$^3$.

**12.** Instrument de mesure gravimétrique selon l'une des revendications 8 à 10, **caractérisé en ce que** le poids de calibrage (123) est réalisé à partir du même matériau que le dispositif de transmission de force (110, 210, 310, 410, 510, 610), et **en ce que** pour compenser l'influence de la densité, une masse complémentaire est reliée au poids de calibrage (123) et/ou il est prévu un capteur de pression pour détecter la pression environnante de l'instrument de mesure gravimétrique.

**Fig. 1**

# Fig. 2

Fig. 3

Fig. 4

# Fig. 5

EP 2 336 736 B1

# Fig. 6

EP 2 336 736 B1

# Fig. 7

# Fig. 8

**EP 2 336 736 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0955530 B1
- CH 661121 A5
- JP 3761792 B
- DE 10024017
- US 20080218303 A1